# EUROPEAN PATENT APPLICATION

(11) **EP 1 000 714 A1**
(43) Date of publication of application: **17.05.2000**
(21) Application number: 98900445.2
(22) Date of filing: 19.01.1998
(51) Int. Cl.: B26B 13/26, B23D 29/02, H02G 1/00

(54) **ROTARY CUTTING PLIERS**

(30) Priority: 22.01.1997 JP 4281797
(71) Applicant: Wada, Minoru, Kashihara City, Nara 634 (JP)
(72) Inventor: Wada, Minoru, Kashihara City, Nara 634 (JP)
(74) Representative: Kilian, Helmut, Dr.
(86) International application number: PCT/JP98/00225
(87) International publication number: WO 98/32573

(57) **Abstract**

Ordinary cutting pliers used for cutting electric wires, in which, so as to turn to zero(0) the ineffective portion of the working distance between the cutter forming base on the bearing circumference and the supporting point in the supporting axis, which had been the direct cause of a shortage in cutting force, on the left side of vertical wire insert 12 opened from the rotary center of bearing disk 8 mounted on one member, curved cutter 9ₐ is mounted from this rotary center, rotor 14 in which circumference cutter 16 comes to be in contact with this rotary center is embedded, and on this rotor 14, curved cutter 9_{b} having the same diameter as that of said cutter 9ₐ is mounted, and on lefteard-inclined wire insert 31 opened to bearing disk 27 mounted on another member, curved bottom 29 is mounted from the rotary center, and between both bearing disks, rachet 32 facing leftward is incorporated in the circumference and, in the right bottom of vertical wire insert 39 opened from the rotary center, rotary shaft 34 with curved cutter 36 mounted from the circumference is incorporated, thereby combining both members at free rotation by circumferential supporting means, and inversion belt 40 is loaded on the right circumference of rotary shaft 34, and on the lower portions of both diskes, feed pawl 39 of rotary shaft 34 and fixing pawl 30 interlocking with it are mounted, and in lower handles 2 and 22 of both members, an inverter for rotary shaft 34 that interlocks with belt 40 is mounted.

The present invention is mainly used for cutting electric wires having large diameters, but application of circumferential cutter 16 of rotor 14 attached with one curved cutter 9_{b} enables selection and cutting of electric wires having middle diameters and small diameters.

## Description

### TECHNOLOGICAL FIELD

The present invention relates to an improvement of the cutting pliers used for cutting electric wires.

### TECHNOLOGICAL BACKGROUND

The conventional cutting pliers, in which the cutters thereof are mounted on the basis of the front circumference of the bearings unified on the cutter arm, and the distance between the bearing circumference and supporting point of the spindle that are to operate on the lever's principle the most efficiently turns an ineffective working distance not-allowing insertion of elecric wires due to their unique composing materials, was not able to obtain a cutting force enough to satisfy the applicable range. So the eccentric cutting pliers in which the front of the bearings had been made thinner, the ineffective distance had been shortened and the cutting force had been increased 1.5 times than the conventional force appeared. The shaftless super cutting pliers of Japanese Patent Application NO.25295 in 1988 in which the supporting axis is removed, the cutters are formed directly from the supporting point and they are supported by the circumferential ring on the cutter arm, thereby deleting the ineffective portion of the aforementioned working distance and additionally increasing the cutting force 2.5 times, was developed. On the other hand, this innovative cutting pliers that was initially allowed for access to the supporting point by this epockmaking means is also incapable of deleting the ineffective distance due to an unavoidable small clearance caused between the circumference of the electric wires inserted between both cutters and the supporting points. There has occurred the operational contradiction that the more one tries to lower the clearance, the more one must open the handle.

### DISCLOSURE OF THE INVENTION

Also in said shaftless cutting pliers, both cutters formed from the supporting point are opened-closed in a V-shape, so an ineffective distance had occurred. In the circumferential supporting means to be the base of the present invention, formation of the curves of both cutters from the supporting point according to the circumferences of the electric wires with the maximum diameters set in conformity with the dimensions of the cutting pliers and insertion of wires into the curves cause the circumference on one side of the electric wires to come into complete contact with the supporting point, thus making the ineffective distance 0 (zero). So the one cutter is rotated, thereby conducting cutting.

### BRIEF DESCRIPTION OF THE DRAWINGS

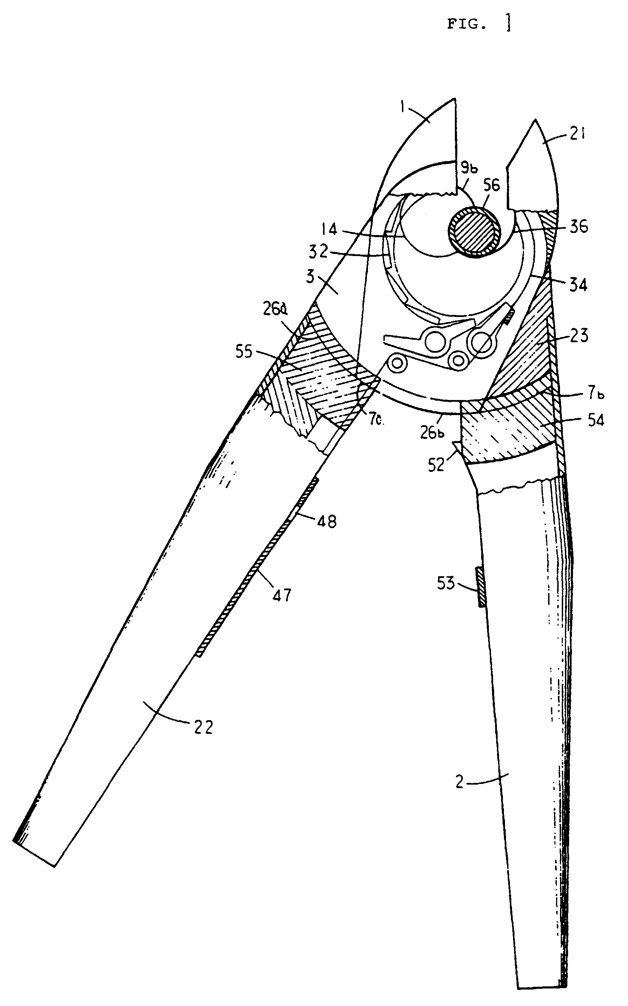

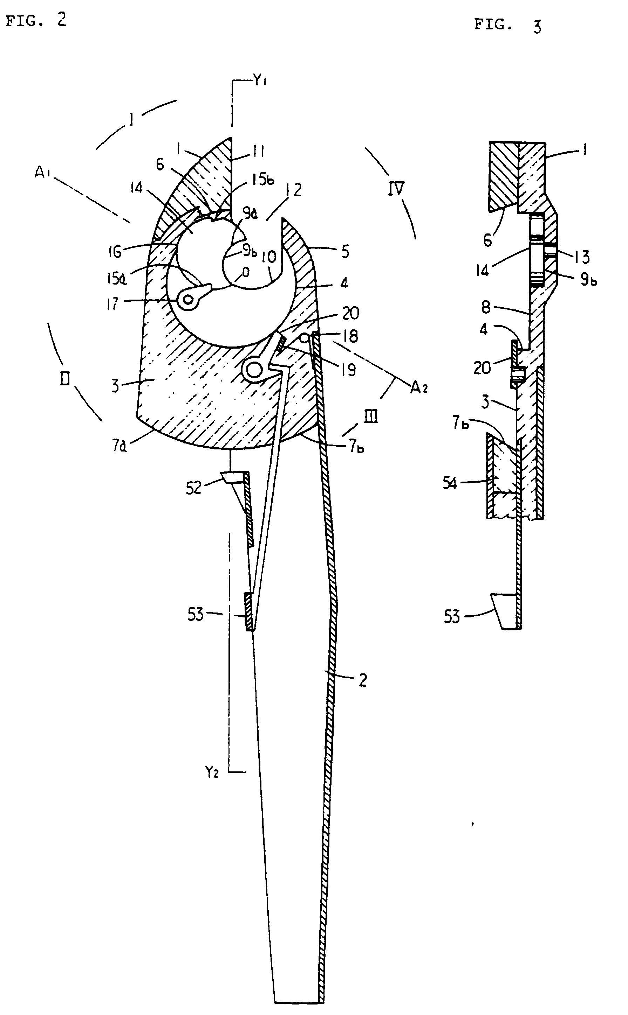

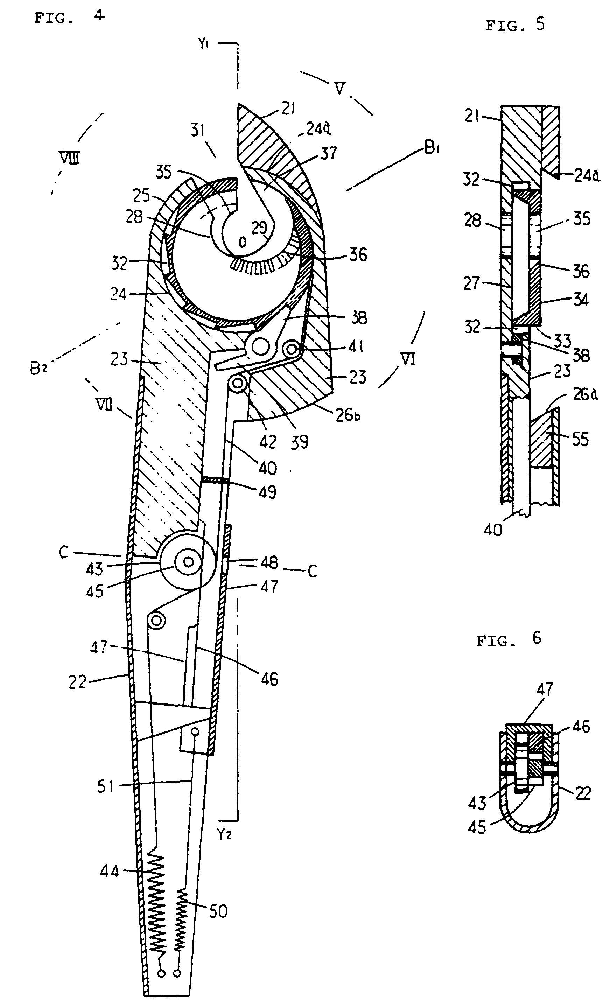

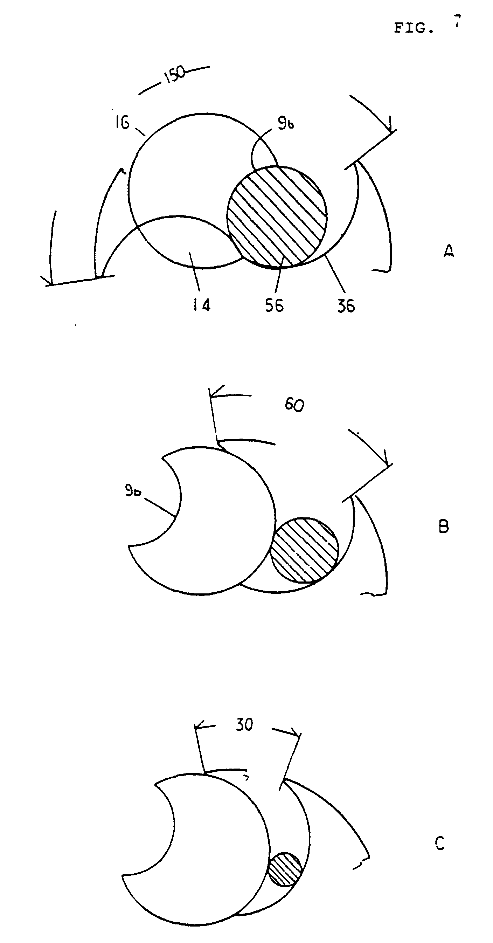

Fig.1 shows the front view of the present invention. Fig.2 shows the longtudinal sectional view of the right member. Fig.3 shows the longitudinal sectional view of Center Line Y₁ - Y₂. Fig.4 shows the longitudinal sectional view of the left member in Fig.1. Fig.5 shows the longitudinal sectional view between Center Line Y₁ - Y₂ in Fig.4. Fig.6 shows the cross sectional view between C - C in Fig.4. Fig.7 shows 3 types of cutting of the present invention.

### OPTIMUM CONDITIONS FOR EXECUTING THE INVENTION

In Fig.2, upper left elevation angle A₁OY₁ having the apex that is an intercting point 0 of inclined line A₁ - A₂ and vertical line Y₁ - Y₂, having a left-up elevation angle 60° created by intersection is made I, left-down inclination angle A₁OY₂ is made II, right-down inclination angle Y₂OA₂ is made III , right-up elevation angle A₂OY₁ is made IV, and between wire catcher 1 projecting upward in said angle I and right handle 2 extending downward in relative angle III, with said intersecting point 0 being made the rotary center, bearing disk 8 having a constant depth from the surface of lower disk 3 and inner circumference 4 with a constant radius is formed, curved cutter 9ₐ based on rotary center 0 on the lower unit of the longitudinal side 11 of wire catcher 1 along with vertical line Y₁ - O and vertical wire insert 12 having curved bottom 10 on the right side thereof are opened, circumferential dimension comprising an opening width, curved cutter 9ₐ and curved bottom 10 is made equal to the outside diameter of electric wires 38² - IV.

Then for extension of the functions, in the left side of circumference 16 to be a cutter in stead of this fixing curved cutter 9_{a,}, rotor 14 that is in contact with the rotary center of this bearing disk 8 is embedded, and on one side of this circumference 16, curved cutter 9_{b} having the same diameter of curved cutter 9ₐ is mounted, and on the relative circumference thereof, rotaty fixing concaves 15ₐ and 15_{b} are made and on the lower portion thereof, stopper 17 for rotor 14 is mounted.

Next, in Fig.4, right-up inclination angle Y₁OB₁ having the apex that is an intercting point 0 of inclined line B₁ - B₂ and vertical line Y₁ - Y₂ having a right-up inclination angle 60° is made V_{,} and right-down inclination angle B₁OY₂ is made VI, and left-down inclination angle Y₂OB₂ is made VII, and right-up inclination angle B₂OY₁ is made VIII, and between right wire catcher 21 projecting upward in angle V and left handle 22 extending downward in relative angle VII, said intersecting point 0 is made the rotary center, bearing disk 27 having a constant depth and inner circumference 24 with a constant radius from the surface of lower disk 23 is formed, and in this disk 27, wire insert 31 having a left inclination angle of 30° is opened in VIII, and on the bottom in contact with rotary center 0, left curved face 28 and right curved face 29 having the same diameter as that of said curved cutter 9ₐ are formed. Next, disk-shaped rotary shaft 34 having a constant thickness and constant radius, that is incorporated into bearing disks 8 and 27 of other member in Fig.4 is mounted, and on the right side from the upper vertical line Y₁ - 0, wire insert 37 having the same width as the outside diameter of said electric wires is opened, and along with this vertical line Y₁0, curved face 35 having the same diameter as that of curved cutter 9ₐ mounted on bearing disk 8 from rotary center 0 is formed on the left lower portion thereof and curved cutter 36 on the base of rotary center 0 is formed on the right side thereof, and on the circumference thereof, per-30° -notched ratchet 32 facing leftward is mounted, and on the lower disk 3 of bearing disk 8, fixing pawl 20 having end 19 interlocking with feed pawl 38 of this ratchet 32, and pushing spring 18 is mounted. Then, on the right circumference of this rotary shaft 34, reversing belt 40 with upper end being fixed is loaded, then is loaded on the interlocking pulley 43 in left handle 22 through eccentric rollers 41 and 42 in lower disk 23, thereby combing the lower end with lower shrinking spring 44. Next, on the left side of of feed pawl 38, tripper 39 is mounted and on the side face pulley 43, gear 46 having one second(1/2) diameter thereof is mounted, thereby mating rack 45 having a constant length, and, on the upper portion of this rack 45, push arm 47 of interlocking tripper 39 is mounted, thus combining the lower end with lower shrinking spring 50 in left handle 22 by means of wire 51, and on the upper portion of right handle 2, stopper 52 is mounted at the rising limit of push arm 47.

Next, in the bearing disk 27 of this member, front half of rotary shaft 34 with ratchet 32 mounted on the circumference is incorporated, and to the inner circumference 4 of bearing disk 8 of said member, circumference 33 on the back side, with a small diameter, is matched and the latter half is incorporated therein, thus combining both of them. Then, as combining means thereof, in left-up inclination angle I of 60° from rotary center 0, to inclined exposed circumference 6 having a constant thickness from lower disk 3 of one bearing disk 8, inclined circumference 25 in inclination angle VIII of 120° that retreats 30° from said angle of another bearing disk 27 is matched, and in right-up inclination angle IV of 120° , to inclined exposed circumference 5 of bearing disk 8, inclined inner circumference 24ₐ that advances 30° , in inclination angle V of 60° of another bearing disk 27, is matched, and in right-down inclination angle III of 60° , to right inclined circumference 26_{b} of lower disk 23 of bearing disk 27, inclined inner circumference 7_{b} of upper fixing chip 54 of right handle 2 is matched, and in left-down inclination angle II of 120° , on the contrary, to inclined circumference 7ₐ of lower disk 3 to be incorporated in the left rear face of lower disk 23 of bearing disk 27, inclined inner circumference 26a of fixing chip 55 of upper rear face of left handle 22 is matched. These four(4) units cause rotor 14 having fixing curved cutter 9ₐ of one member, or circumference 16 and curved cutter 9_{b} in stead of it and curved cutter 9_{b} of rotary shaft 34 to be in complete contact and rotate 30° freely in right and left inclination angles A₁OB₂ and B₁OA₂ of vertical line Y₁ - Y₂ of both members.

### ACTION

In said embodiment of the present invention, the maximum electric wires that can be cut is made 38²-IV and the opening-closing angles of both handles are made 30° . With regard to the application method, when fully opening the left and right handles, three(3) units of vertical wire insert 12 of one member, leftward-inclined wire insert 31 of bearing disk 27 of another member and vetical wire insert 37 of rotary shaft 34 between both of them are fully opened in alignment in the vertical direction, so both handles are opened-closed through insertion of electric wires into them, and in electric wires 38²-IV having the maximum diameter to be executed in this embodiment, as in Fig. 1, insertion of electric wires 56 into the inserts of the three(3) units in alignment causes the circumference to be inserted between one curved cutter 9ₐ, or curved cutter 9_{b} of rotor 14 and curved cutter 36 of another rotary shaft, and to come in complete contact with the supporting point of the rotary center. 5 times' opening-closing of both handles causes rotary shaft 34 to rotate counter-clockwise 150°, thus completely cutting this electric wires. When, in interlocking with the shortened rising of rack 46 mating gear 45 that is arranged with pulley 43 and has one second(1/2) of the diameter thereof, push arm 47 rises, rotary shaft 34 rotates 150° and the cutting comes to an end, forward end 49 pushes tripper 39 on the left side of feed pawl 38, but at this time, both handles are closed, and stopper 52 mounted on the upper portion of right handle 2 rushes into stoppage concave 48 mounted on the side of this rised arm 47, thereby temporarily stopping the lowering action, so while grasping both handles, feed pawl 38 is inverted and then is released out of ratchet 32, and during it, in interlocking with the lowering motion of belt 40 caused by shrinking spring 44, rack 46 is also simultaneously lowered, and rotary shaft 34 is inverted, thus making a return to the home position. Next when opening both handles, stopper 52 of right handle 2 is disconnected out of concave 48 of push arm 47, so arm 47 on the upper dead is lowered by shringking spring 50 and then it is unified with rack 46.

After the 1st cutting, in such way, cutting is done by repeating this motion from the next time. Curved cutter 9_{b} of rotor 14 in stead of fixed curved cutter 9ₐ of bearing disk 8 is used for cutting of electric wires having a large diameter, such as said 38²-IV, and electric wires having a middle diameter or less are cut between circumferential cutter 16 and curved cutter 36 with a plus driver being put in close contact with the cross groove on the head of main spindle 13 on the rear face thereof. In this case, identically with the ordinary cutting pliers, cutting is done by once grasping operation of the handle, and for its purpose, initially feed rotary shaft 34 by 60° through twice operation of the handle, and match curved cutter 36 to circumferencial cutter 16 of rotor 14, then, so as to stop the rotation of rotary shaft 34, the upper trip lever 53 of right handle 2 is pulled and fixed pawl 20 is disconnected out of circumferential racket 32.

### Industrial utilization

Circumferential support deletes the ineffective portion of the working distance that is the greatest defect of the conventional cutting pliers, and also in the former shaftless cutting pliers that had pursued the limit of the cutting force, with regard to the small clearance between the circumference of residual cutting electric wires and the supporting point, insertion of electric wires between the cutters curved from the rotary center causes one circumference to come in complete contact with the supporting point and equalizes the radius of the electric wires to the working distance, thereby turning the ineffective distance zero (0). So, in electric wires 38²-IV of the former embodiment of the former example, radius 6mm of nominal outside diameter 12mm turns a 100% effective working distance, and cutting pliers having a handle 180mm from the supporting point increases the cutting force to 30 times. This means twice of the cutting effect of said eccentric cutting pliers or three(3) times of that of the conventional cutting pliers. Rotating one curved cutter enables easy cutting of electric wires having a large diameter in this embodiment. For cutting of electric wires having a middle diameter or less, one rotor 14 is rotated and circumferential cutter 16 that comes in contact with the supporting point is used, thereby lessening the cutting force to around half of the force of the conventional cutting pliers. In addition to this cutting effect, both of rotor 14 - one cutter and rotary shaft 34 with another cutter being mounted are changeable for abrasion, thus application of the innovative cutting pliers of the present invention enables application extension and efficient wiring.

The present invention is also applicable to other cutting tools.

## Claims

1. Rotary cutting pliers being characterized by comprising that, on the upper portion of one member equipped with right handle 2, bearing disk 8 having circumference 4 with a constant radius and constant depth is formed, and on the right of upper vertical line Y - O passing through rotary center O, vertical wire insert 12 being equipped with curved bottom 10 and having a constant width, is opened, and on the left side, curved cutter 9ₐ is formed from rotary center O, and on the upper portion of another member, that is equipped with left handle 22, bearing disk 27 having a constant radius and constant depth is formed, and wire insert 31 inclined leftward in a constant angle, with a constant width, that has formed curved bottom 29 on the left side of upper vertical line Y - O passing rotary center 0 is opened, and on the left side, curved face 28 is formed from rotary center 0, and in this bearing disk 27, ratchet 32 facing leftward in a constant angle and inversion belt 40 thereof are loaded on the circumference, and on the right side of upper vertical line Y - O passing through rotary center O, vertical wire insert 39 having a constant width is opened, and in the bottom, front half of disk-shaped rotary shaft 34 in which curved cutter 36 is formed from rotary center 34 is incorporated, and on lower disk 23 of this bearing disk 27, feed pawl 38 attached with tripper 30 on the left side of circumferential ratchet 32 of rotary shaft 34 is mounted, and on the relative face of lower disk 3 of bearing disk 8 of said one member, fixing pawl 20 of rotary shaft 34 having end 19 interlocking with feed pawl 38 is mounted, and the latter half of rotary shaft 34 is incorporated into bearing disk 8 of one member, then, both members are relatively combined at free rotation by means of circumferential supporting means, and the lower portion of said inversion belt 40 is loaded on interlocking pulley 43 in left handle 22, and the lower end is combined with shrinking spring 44, and together, on rack 46 that has a constant length and is mated with working distance shortening gear 45 arranged with interlocking pulley 43, push arm 47 parallel with the inside of left handle 22 is mounted, and on the upper portion thereof, pressing end 49 of tripper 39 on the left side of said feed pawl 38 and on the side thereof, stopage concave 48 is mounted, and the lower end is combined with shrinking spring 50 in the lower unit of left handle 22, and on the upper portion of the inside of right handle 2, stopper 52 on the upper dead centre of push arm 47 in left handle 22 and trip lever 53 of fixing pawl 20 in lower disk 3 are mounted.

2. Rotary cutting pliers as described in claim 1, in which, in bearing disk 8 of one member, rotor 16 in which cutter 16 mounted on the circumference comes in contact with rotary center O of this bearing disk 8 is embedded, and curved cutter 9_{b} is mounted on the one side of this rotor 14.
